**Europäisches Patentamt**

**European Patent Office**

**Office européen des brevets**

(11) Publication number : **0 471 401 A2**

(12) **EUROPEAN PATENT APPLICATION**

(21) Application number : **91201958.5**

(22) Date of filing : **26.07.91**

(51) Int. Cl.⁵ : **B65G 47/71**

(30) Priority : **06.08.90 NL 9001767**

(43) Date of publication of application :
**19.02.92 Bulletin 92/08**

(84) Designated Contracting States :
**BE DE ES FR GB IT LU NL**

(71) Applicant : **Smit, Gerardus**
**Middelmonde 188**
**NL-3434 KT Nieuwegein (NL)**

(72) Inventor : **Smit, Gerardus**
**Middelmonde 188**
**NL-3434 KT Nieuwegein (NL)**

(74) Representative : **Voncken, Bartholomeus**
**Maria Christiaan et al**
**Octrooibureau Los en Stigter B.V. P.O. Box**
**20052**
**NL-1000 HB Amsterdam (NL)**

(54) **Apparatus for selectively separating a bottle from a stream of bottles.**

(57) Apparatus for selectively separating a bottle from a stream of bottles, comprising pairs of co-operating clamping jaws for receiving there between a bottle. The clamping jaws are movable to and fro relative to each other and commonly perpendicularly to their direction of propulsion. This to and fro movement is caused by catches co-operating with guiding recesses.

EP 0 471 401 A2

fig.3

The invention relates to an apparatus for selectively separating a bottle from a stream of bottles.

When using bottles, such as bottles for beverage, the bottles are subjected to several operations. For example filling, the application or removal of a cap and cleaning. Although generally a supplied stream of bottles is carried to an operating machine in batches it may be required under some circumstances that one or a number of bottles have to be separated from the supplied stream of bottles, for example if a bottle differs in a certain respect from the remaining bottles (different type of bottle, damaged bottles, polluted bottles etcetera). Moreover it is possible that a supplied stream of bottles is devided in a number of substreams which are each supplied to a separate operating machine for a parallel operation. It is an object of the invention to provide an apparatus for selectively separating a bottle from a stream of bottles which operates fast and reliably and which its flexible in its use.

Thus the apparatus according to the invention is characterized by at least one pair of propellable co-operating clamping jaws for receiving there between a bottle, which clamping jaws, relative to each other and commonly, are movable to and fro perpendicularly to their direction of propulsion, wherein each pair of clamping jaws carries a projecting catch for a selective co-operation with a guiding recess which extends in a plane parallel to the direction of propulsion of the clamping jaws and which causes the common motion of the clamping jaws.

After a bottle has been received between the clamping jaws this bottle will be propelled together with the clamping jaws. If the projecting catch will co-operate with the guiding recess the assembly of clamping jaws and bottle received there between will follow the track determined by this guiding recess, such that the clamping jaws, apart from their propulsion, will be displaced perpendicularly to their direction of propulsion too. Next the clamping jaws are opened again such that the bottle can be removed. A bottle which is carried by a pair of clamping jaws of which the catch will not engage the guiding recess is offered at another place. Thus for each bottle from the supplied stream of bottles there will be determined dependant of the fact whether and how the projecting catch co-operates with the guiding recess, where this bottle will be delivered by the apparatus. Like this the stream of bottles can be separated in substreams.

According to a preferred embodiment of the apparatus according to the invention the catch exists of two catch halves which are fixed to the clamping jaws and which, in the bottle receiving position of the clamping jaws, substantially adjoin each other, whereas the guiding recess comprises at least one branching which is provided with points.

In this embodiment both catch halves will always enter the guiding recess during the propulsion of the clamping jaws. Because the catch comprises two catch halves the result is that the two clamping jaws will stick together and will reliably hold the bottle. Depending on the position of the points at the branching in the guiding recess the combined catch will follow the one branch or the other branch of the guiding recess, thus displacing the clamping jaws with the bottle towards the one or towards the other side.

It is possible, that the points are controlable by a signal from a sensor sampling each bottle. This sensor, providing the signal which controls the points, may measure a dimension of the bottle, may determine the colour of the bottle, may determine whether the bottle is empty etcetera.

In the previous embodiments the movement of the clamping jaws perpendicularly to their direction of propulsion is obtained through a stationary catch and a guiding recess comprising points. However for obtaining such a movement a different possibility exists too. Thus in an alternative embodiment the apparatus according to the invention is characterized in that the catch is movable relative to the clamping jaws, whereas the guiding recess is entirely stationary. In such an embodiment the way in which the catch will co-operate with the guiding recess depends on the position of the catch relative to the clamping jaws.

Basically two possibilities exist. According to the first possibility the guiding recess comprises a branching, wherein the catch is movable between the position in which it follows the one branch of the guiding recess and a position in which it follows the other branch. Whether the clamping jaws will follow one branch of the guiding recess or the other depends in such an embodiment exclusively on the position of the movable catch. Independant of the position of this catch it will always co-operate with the guiding recess.

According to the second possibility the guiding recess is simple, wherein the catch is movable between the position in which it stays out of engagement with the guiding recess and a position in which it comes in engagement with the guiding recess. When the catch is in the position in which no engagement with the guiding recess occurs the clamping jaws will be propelled without being displaced perpendicularly to their direction of propulsion. Only when the catch is positioned in the engagement position a movement of the clamping jaws perpendicularly to their direction of propulsion will occur due to a co-operation between this catch and the guiding recess.

In both previously mentioned possibilities it is preferred, that the catch comprises an operating mechanism which is activatable through a variation of a dimension of the received bottle. For example the varying dimension may be a dimension of the bottle or its weight. Separating a bottle in this way occurs completely automatically, without the application of additional sensors or alike.

A constructively advantageous embodiment is characterized in that the catch is attached to the one end of a pivoting lever mounted on one of the clamping jaws, which under influence of the varying dimension is pivotable such, that the catch is movable from its one position towards its other position. Especially if the other end of the lever co-operates with the other clamping jaw, such that a variation of the distance between both clamping jaws causes a pivoting of the lever, a diameter dimension of the bottle is used as a measure whether or not to pivote the lever. When the clamping jaws engage the neck of the bottle the respective dimension is constituted by the diameter of this neck. Using such an embodiment bottles can be sorted based upon their neck diameter.

Another embodiment using a lever is characterized in that the clamping jaw carrying the lever also comprises a resilient support entirely carrying the bottle, whereas the other clamping jaw functions only as limiting means for the bottle, wherein the resilient support co-operates with the other end of the lever, such that variation of the weight of the received bottle causes a pivoting of the lever. In such a case the weight of the bottle received in the clamping jaws is used as a measure whether or not to move the lever. It is perfectly clear that in a way like this sorting bottles may occur based upon weight.

For avoiding that the lever occupies an intermediate position when sorting on weight, which could lead to problems at the points of the guiding recess, a special embodiment is preferred characterized by the provision of a snap spring known per se which allows only that the lever is in its two extreme positions, wherein the transition from the one position towards the other only occurs at a determined force exerted onto the snap spring. As a result a division of the bottles into classes occurs, the boundary between both classes being sharply determined.

Of course it is possible too, that also in embodiments comprising such an operating mechanism, this operating mechanism being controlable through a signal from a sensor sampling each bottle.

For obtaining a catch which is movable relative to the clamping jaws, whereas the guiding recess is completely stationary, still another possibility remains. Thus each clamping jaw comprises a catch which may be positioned in a number of selected adjoining positions, wherein both catches, when provided in corresponding positions on the clamping jaws, cooperate with one of a corresponding number of guiding recesses. Dependant on where the catch is positioned the pair of clamping jaws will follow the track determined by one of the guiding recesses. Catches positioned in a certain position will enter the corresponding guiding recess. Catches provided in a different position enter a different guiding recess corresponding therewith. When the apparatus comprises a large amount of pairs of clamping jaws, of which the catches are provided in different positions, an automatic separation of the supplied stream of bottles in a number of substreams occurs. Such an embodiment is extremely fit for offering supplied bottles to a number of parallel corresponding operating machines.

For the movement of the clamping jaws perpendicularly to their direction of propulsion it can be advantageous if each clamping jaw carries at least one guiding boss which can co-operate with guidings extending in a plane in parallel with the direction of propulsion of the clamping jaws. Especially in embodiments where the catch comprises two catch halves moving apart the clamping jaws for delivering the received bottle is not possible using these catch halves. If however additional guiding bosses are used the movement of the clamping jaws relative to each other can be obtained in a controlled way.

According to a preferred embodiment of the apparatus according to the invention each pair of clamping jaws is slidable along at least one guiding rod which is mounted between two endless chains moving around in adjoining vertical planes. Generally a large number of pairs of clamping jaws will be provided between the two endless chains, such that the apparatus may operate continuously and has a large capacity.

Further it is advantageous if the endless chains each follow an oval track determined by two chain weels, of which the straight sections extend horizontally. In such an embodiment the horizontally extending straight sections are used for receiving the bottles, changing the track of the clamping jaws and for again delivering the bottles.

As has been noted previously the clamping jaws may engage the neck of the bottles. However it is possible too, that the clamping jaws engage the bottom of the bottles. This does not change the principle of the apparatus.

Hereinafter the invention will be elucidated referring to the drawing, in which a number of embodiments of the apparatus according to the invention are represented.

Fig. 1 shows in a side elevational view and schematically an embodiment of the apparatus according to the invention;

Fig. 2 shows on a larger scale a section according to II-II in fig. 1;

Fig. 3 shows as a planar development the principle of the operation of the apparatus shown in fig. 1;

Fig. 4 shows an embodiment of the apparatus according to the invention comprising an automatic measurement of thickness;

Fig. 5 shows an embodiment of the apparatus according to the invention comprising an automatic measurement of weight, and

Fig. 6 shows an embodiment of the apparatus according to the invention for automatically separating a stream of bottles.

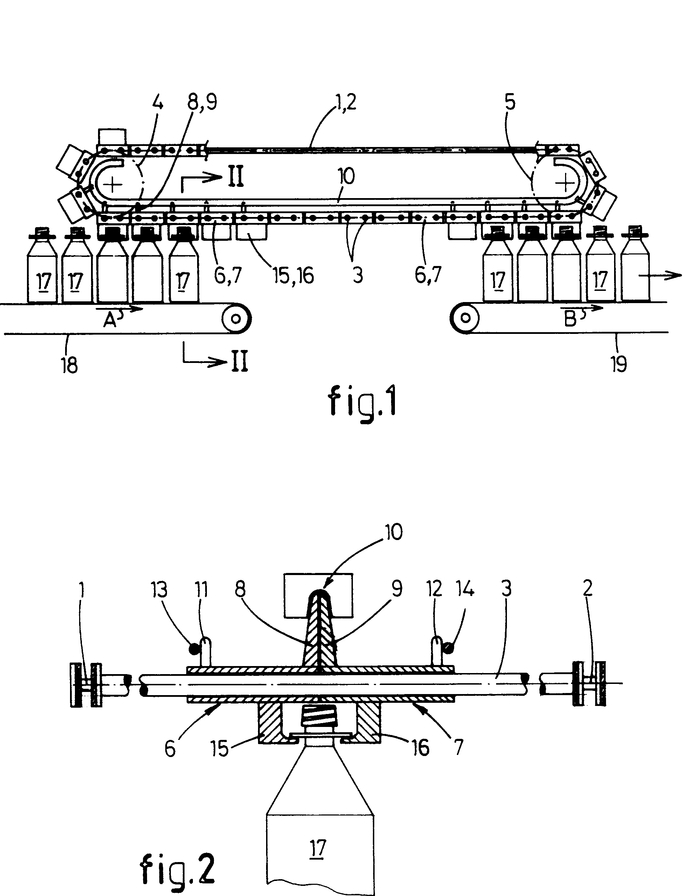

As appears especially from fig. 1 and 2 the illustrated embodiment of the apparatus according to the invention comprises two endless chains 1 and 2 moving around in adjoining vertical planes. The endless chains 1 and 2 are interconnected by guiding rods 3. These guiding rods 3 may be applied on elongations of the link pins of the chains 1, 2. The chains are led around two chain weels 4 and 5 such that each chain follows an oval track of which the straight sections extend substantially horizontally.

Two clamping jaws 6 and 7 are slidably mounted on each pair of adjoining guiding rods 3. At their upper side the clamping jaws 6, 7 carry catches 8, 9 which in a way to be described later, co-operate with guiding recesses 10 only schematically indicated in fig. 1. Further it appears from fig. 2, that the clamping jaws 6 and 7 comprise guiding bosses 11, 12 which, in a way to be described later also, can co-operate with guidings 13, 14 extending in a plane in parallel with the direction of propulsion of the clamping jaws.

At their lower side the clamping jaws 6, 7 comprise gripping parts 15, 16 which in the shown embodiment are fit for gripping a bottle 17 at its neck. It is noted here that the gripping parts may also comprise a shape such, that they are fit to engage a bottle at its bottom.

Using an only schematically indicated conveying device 18 the bottles 17 are supplied in the direction of arrow A. The chains 1, 2 are driven such that the clamping jaws 6 and 7 move in correspondence with the conveying direction A of the conveying device 18. In a way to be described later care is taken that at that moment at which the clamping jaws 6, 7 are applied at the level of the neck of a bottle 17 these clamping jaws 6 and 7 are somewhat distanced. Next the clamping jaws 6 and 7, while moving synchronously with the bottles 17, will be moved towards each other whereupon the neck of the bottle 17 will be received between the gripping parts 15, 16. During the continuous movement of the clamping jaws 6, 7 (to the right in fig. 1) the bottles 17 will then be taken away from the conveying device 18.

At the opposite end of the apparatus the bottles 17 are placed upon a conveying device 19 of which the conveying direction is indicated by arrow D. After the bottles 17 have been placed upon this conveying device 19 the clamping jaws 6 and 7 are moved apart and the gripping parts 15, 16 give free the neck of the bottle 17. Next the clamping jaws 6, 7 will be moved back towards the starting position via the upper part of the chains 1, 2 for again receiving a bottle 17. For correctly engaging the neck of the bottles 17 a perfect synchronisation between the supplied bottles and the supply of the clamping jaws 6, 7 by means of the chains 1, 2 is required. This synchronisation may be obtained in many ways not to be described here.

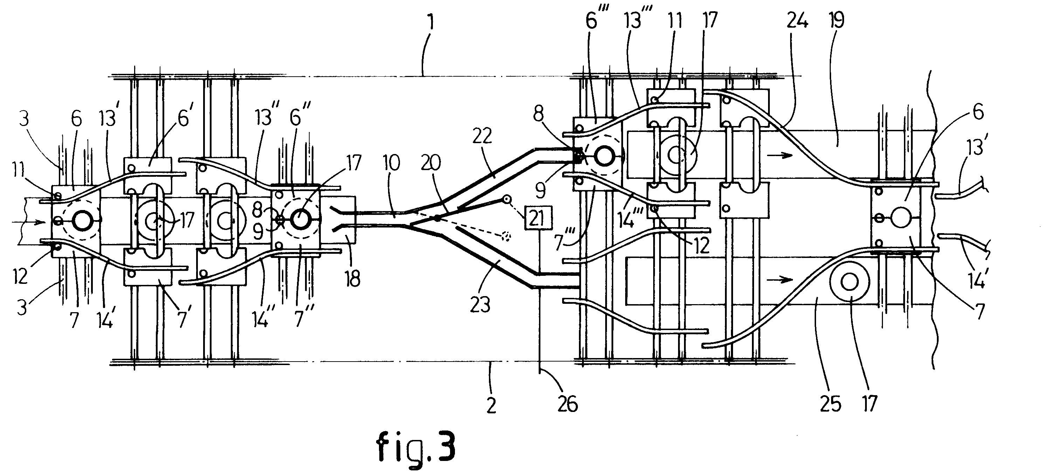

Although in fig. 1 there has only been shown one discharge conveying device 19, generally there will be a number of conveying devices 19 for discharging bottles alongside each other, because it is the principle of the illustrated apparatus that between the conveying devices 18 and 19 bottles 17 supplied by the conveying device 18 will be devided into two or more streams of bottles to be discharged. Later on this will be elucidated further referring to fig. 3.

The basic operation of the apparatus shown in fig. 1 and 2 will now be described referring to the diagram of fig. 3. Fig. 3 shows a planar development of the movement of the clamping jaws 6, 7 in correspondence with fig. 1. The parts which are essential for the understanding have been indicated schematically; other parts have been left out. This planner development has to be interpreted such that the right handed part of fig. 3 connects to the left handed part thereof.

As has already been indicated shortly referring to fig. 1 etcetera the apparatus comprises a guiding recess 10. Moreover guidings 13 and 14 are provided. The guiding recess 10 co-operates with catches 8, 9 on the clamping jaws 6 and 7 whereas the guidings 13 and 14 co-operate with the guiding bosses 11 and 12. This appears clearly from fig. 3, in which extreme left a position of the clamping jaws 6, 7 has been indicated in which they are in a central position contacting each other. Such a position may for example occur in the upper returning section of the chains 1, 2. Due to appropriate guidings 13' and 14' co-operating with the guiding bosses 11 and 12 the clamping jaws 6 and 7 are separated. Thus the position of the clamping jaws 6' and 7' is obtained. In this position the clamping jaws have passed the chain weel 4 (see fig. 1) and are at opposite sides of a bottle 17' to be received. This bottle 17' is positioned on the conveying device 18.

While the clamping jaws thereafter are propelled synchronously with the bottle present on the conveying device 18, appropriate guidings 13" and 14" exert such a force upon the guiding bosses 11 and 12 that the clamping jaws are moved towards each other and will finally reach the position of the clamping jaws 6" and 7". Now the neck of the bottle 17 is gripped. In this situation the catches 8 and 9 of the clamping jaws 6" and 7" nearly contact each other.

When the clamping jaws move onwards the catches 8 and 9 are received in the guiding recess 10. In the illustrated embodiment points 20 are applied in this guiding recess 10 which are drivable by a drive means 21 as indicated schematically. At the location of the points 20 the guiding recess 10 branches into branches 22 and 23. When the points 20 are in the position indicated in full lines the catches 8 and 9 will be forced to enter branch 22. Then the clamping jaws together with the bottle received are moved towards a position that corresponds with the position of the clamping jaws 6''' and 7'''. Starting from this position the clamping jaws will then be moved apart by appropriate guidings 13''' and 14''' which engage the guiding bosses 11 and 12, such that the bottle 17 is freed. At this moment the bottle 17 is already on the discharge conveying device 19 which further removes the bottle 17.

Aided by a guiding 24 the clamping jaws are then moved back towards the central starting position as indicated at the right handed side in fig. 3 by clamping jaws 6 and 7. In this position the clamping jaws 6 and 7 again reach the position as indicated in the left part of fig. 3.

When the points 20 are in the dotted position catches 8 and 9 are forced into branch 23 of the guiding recess 10. Now again guidings follow which entirely correspond with the guidings described before. Bottles following the track determined by branch 23 are finally deposited onto discharge conveying device 25.

In the apparatus shown in fig. 3 the points 20 determine whether a bottle follows one branch 22 of the guiding recess 10 or the other branch 23. For this reason the drive means 21 of the points 20 are by a line 26 connected with a not illustrated sensor which can sample each bottle. Dependant on the result of this sampling switching of the points 20 occurs.

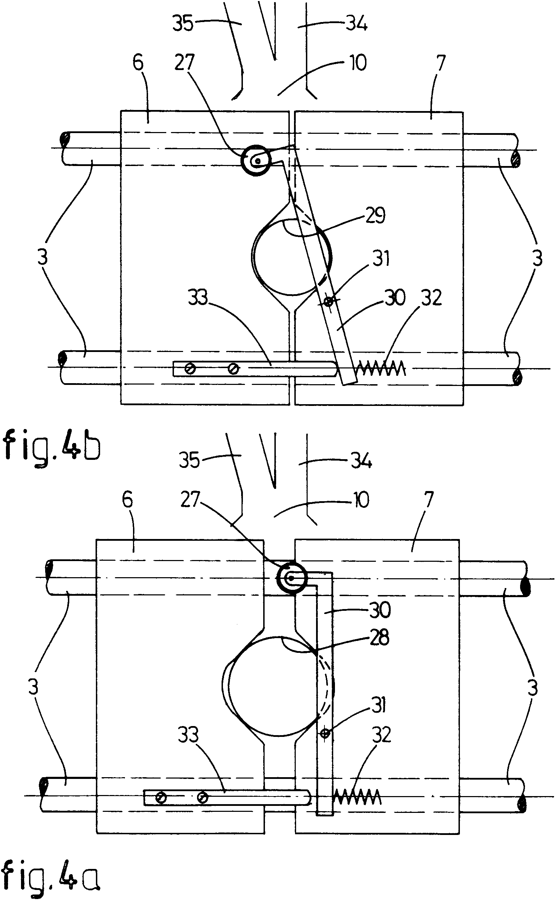

While in the embodiment according to fig. 3 the catches 8 and 9 (which together as it were define a combined catch) are stationary attached to the clamping jaws 6, 7 and while points 20 are provided, fig. 4, 5 and 6 show alternative embodiments in which more or less movable catches are provided.

In the embodiment according to fig. 4 a movement of a catch 27 occurs dependant on the diameter of a bottle neck 28, 29 to be seized. The catch 27 is attached to the end of a lever 30 which can pivot around a pivot axis 31 on clamping jaw 7. The end of the lever 30 facing away from the catch 27 is loaded by a compression spring 32. The other clamping jaw 6 carries a pin 33 which may engage the lever 30 if the distance between the clamping jaws 6 and 7 is small enough. In the situation according to fig. 4a a bottle neck 28 having a large diameter is provided between the clamping jaws 6 and 7 such that the pin 33 just is out of reach of the corresponding end of the lever 30. Catch 27 now is in the represented position. The guiding recess 10 again branches into branches 34 and 35. In the position shown in fig. 4a catch 27 will enter branch 34.

When in correspondence with fig. 4b a bottle neck 29 having a smaller diameter is received between the clamping jaws 6 and 7 the distance between these clamping jaws is smaller. Then pin 33 pushes against lever 30 which will pivot around pivot axis 31. Then catch 27 will assume such a position that it enters branch 34 of the guiding recess 10. Now clamping jaw 7 is moved to the left while moving along clamping jaw 6 in a corresponding way. Thus in this embodiment of the apparatus according to the invention automatically sorting bottles based upon diameter of the bottle neck occurs. Separate sensors are not required here.

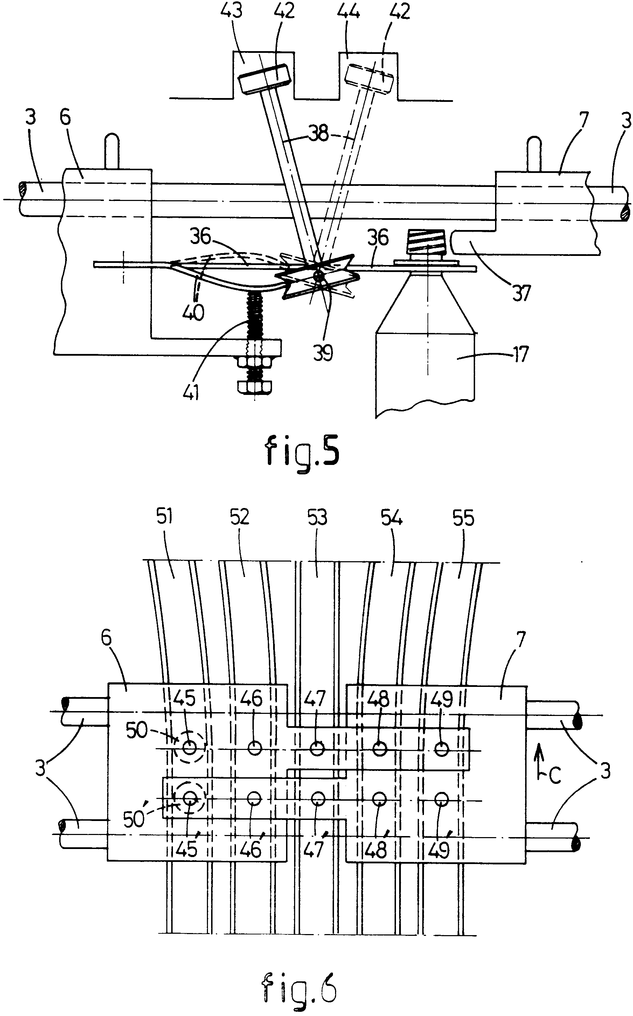

Fig. 5 shows an embodiment in which under influence of the weight of the bottle 17 received a choice of the branch to be followed occurs. In this embodiment one of the clamping jaws 6 comprises a resilient support entirely carrying the bottle 17, whereas the other clamping jaw 7 is provided with an abutment 37 for preventing that the bottle 17 slides off the support 36. The support 36 engages a lever 38 which can pivot around a pivot axis 39. By means of a snap spring 40 known per se it is assured that the lever 38 only assumes a stable position in two extreme positions illustrated in fig. 5. By means of a setting screw 41 engaging snap spring 40 it is possible to set the force which should be exerted by the support 36 on the lever 38 for moving it from the position indicated in full lines towards the position indicated in dotted lines. It will be clear that this force directly depends on the weight of the bottle 17 suspended from the support 36.

At its upper end lever 38 carries a catch or guiding wheel 42 which in correspondence with catch 27 of the embodiment shown in fig. 4 can co-operate with two branches 43 and 44 of a guiding recess. Dependant on the weight of the bottle 17 the catch 42 will then enter branch 43 or branch 44, so that clamping jaws 6 and 7 together with the bottle 17 will follow the corresponding track.

In the embodiments according to fig. 4 and 5 catches 27 and 42 are displaceable such that they are movable in different branches of the guiding recess. Alternatively, not illustrated, it is possible too that in one position of the lever the catches engage the guiding recess, whereas in the other position of the lever they are out of engagement with the guiding recess. The obtained result however does not change.

It is noted further that the control of the levers 30 and 38 occurs dependant on a variation of the diameter of the bottle neck (fig. 4) or the weight of the bottle (fig. 5). It is conceivable however too that the levers are driven by movement mechanisms not shown further which are activatable under influence of signals from a sensor sampling the bottles.

Finally fig. 6 illustrates an embodiment of the apparatus according to the invention in which the clamping jaws 6 and 7 are provided with a number of recesses 45 until 49 and 45' until 49', respectively. Now the clamping jaws 6 and 7 have overlapping parts, such that the recesses always are positioned in pairs (for example recesses 45 and 45') which are aligned in the direction of propulsion of the clamping jaws (indicated by arrow C). In one of the recesses 45 until 49 and in a corresponding one of the recesses 45' until 49' a catch 50 and 50', respectively, is provided. In the illustrated embodiment these catches 50 and 50' are provided in the recesses 45 and 45'.

In this embodiment the apparatus now comprises a multiple guiding recess having guidings 51 until 55. Each of these guidings 51 until 55 corresponds with one of the positions of the catches 50 in the recesses 45 until 49 and 45′ until 49′, respectively. In the illustrated embodiment this means that the catches 50 and 50′ are received in the guiding 51. Thus the clamping jaws 6 and 7 will follow the track determined by the guiding 51. If now successive clamping jaw pairs are provided with catches which are positioned in different recesses these successive clamping jaw pairs will follow different tracks. Like this it is possible to divide a supplied stream of bottles in a number of substreams. In the illustrated embodiment five substreams are created. In the previously described embodiments of the apparatus according to the invention the clamping jaws 6, 7 (gripping parts 15, 16) engage the neck of the bottles 17. However it is possible too that the bottles are seized at another location, for example at the bottom. Basically the apparatus will not change.

Further it is noted that the invention also relates to an apparatus functioning in reversed way, as compared to what has been described. In such an apparatus combining a number of substreams to one stream of bottles occurs. In such a case special synchronisation measures are required to assure that the bottles reach the main stream successively. Basically the apparatus does not change.

The invention is not limited to the embodiments described before which can be varied widely within the scope of the invention.

## Claims

1. Apparatus for selectively separating a bottle from a stream of bottles, **characterized** by at least one pair of propellable co-operating clamping jaws for receiving there between a bottle, which clamping jaws, relative to each other and commonly, are movable to and fro perpendicularly to their direction of propulsion, wherein each pair of clamping jaws carries a projecting catch for a selective co-operation with a guiding recess which extends in a plane parallel to the direction of propulsion of the clamping jaws and which causes the common motion of the clamping jaws.

2. Apparatus according to claim 1, **characterized** in that the catch exists of two catch halves which are fixed to the clamping jaws and which, in the bottle receiving position of the clamping jaws, substantially adjoin each other, whereas the guiding recess comprises at least one branching which is provided with points.

3. Apparatus according to claim 2, **characterized** in that the points are controlable by a signal from a sensor sampling each bottle.

4. Apparatus according to claim 1, **characterized** in that the catch is movable relative to the clamping jaws, whereas the guiding recess is entirely stationary.

5. Apparatus according to claim 4, **characterized** in that the guiding recess comprises a branching, wherein the catch is movable between a position in which its follows the one branch of the guiding recess and a position in which it follows the other branch.

6. Apparatus according to claim 4, **characterized** in that the guiding recess is simple, wherein the catch is movable between a position in which it stays out of engagement with the guiding recess and a position in which it comes in engagement with the guiding recess.

7. Apparatus according to claim 5 or 6, **characterized** in that the catch comprises an operating mechanism which is activatable through a variation of a dimension of the received bottle.

8. Apparatus according to claim 7, **characterized** in that the catch is attached to the one end of a pivoting lever mounted on one of the clamping jaws, which under influence of the varying dimension is pivotable such, that the catch is movable from its one position towards its other position.

9. Apparatus according to claim 8, **characterized** in that the other end of the lever co-operates with the other clamping jaw, such that a variation of the distance between both clamping jaws causes a pivoting of the lever.

10. Apparatus according to claim 8, **characterized** in that the clamping jaw carrying the lever also comprises a resilient support entirely carrying the bottle, whereas the other clamping jaw functions only as limiting means for the bottle, wherein the resilient support co-operates with the other end of the lever, such that variation of the weight of the received bottle causes a pivoting of the lever.

11. Apparatus according to claim 10, **characterized** by the provision of a snap spring know per se which allows only that the lever is in its two extreme positions, wherein the transition from the one position towards the other only occurs at a determined force exerted onto the snap spring.

12. Apparatus according to claim 11, **characterized** in that the force at which the transition occurs is settable.

13. Apparatus according to claim 7, **characterized** in that the operating mechanism is controlable through a signal from a sensor sampling each bottle.

14. Apparatus according to claim 4, **characterized** in that each clamping jaw comprises a catch which may be positioned in a number of selected adjoining positions, wherein both catches, when provided in corresponding positions on the clamping jaws, co-operate with one of a corresponding number of guiding recesses.

15. Apparatus according to one of the claims 1-14, **characterized** in that each clamping jaw carries at least one guiding boss which can co-operate with guidings extending in a plane in parallel with the direction of propulsion of the clamping jaws.

16. Apparatus according to one of the claims 1-15, **characterized** in that each pair of clamping jaws is slidable along at least one guiding rod which is mounted between two endless chains moving around in adjoining vertical planes.

17. Apparatus according to claim 16, **characterized** in that the endless chains each follow an oval track determined by two chain weels, of which the straight sections extend horizontally.

18. Apparatus according to one of the claims 1-17, **characterized** in that the clamping jaws engage the neck of the bottles.

19. Apparatus according to one of the claims 1-17, **characterized** in that the clamping jaws engage the bottom of the bottles.

fig.1

fig.2

fig.3

EP 0 471 401 A2

fig.4b

fig.4a

fig.5

fig.6